# EUROPEAN PATENT SPECIFICATION

(11) **EP 3 110 915 B1**
(45) Date of publication and mention of the grant of the patent: **14.11.2018**
(21) Application number: 15705833.0
(22) Date of filing: 24.02.2015
(51) Int. Cl.: C10G 63/04, C10G 69/08

(54) **PROCESS FOR PRODUCING BTX FROM A C5-C12 HYDROCARBON MIXTURE**
VERFAHREN ZUR ERZEUGUNG VON BTX AUS EINEM C5-C12 KOHLENWASSERSTOFFHALTIGEN GEMISCH
PROCÉDÉ DE PRODUCTION DE BTX À PARTIR D'UN MÉLANGE D'HYDROCARBURES C5-C12

(30) Priority: 25.02.2014 EP 14156600
(43) Date of publication of application: 04.01.2017
(73) Proprietor: Saudi Basic Industries Corporation, Riyadh 11422 (SA); SABIC Global Technologies B.V., 4612 PX Bergen op Zoom (NL)
(72) Inventor: WARD, Andrew, Mark, NL-6160 GA Geleen (NL); FICKEL, Dustin, NL-6160 GA Geleen (NL); DAVIES, Andrew, NL-6160 GA Geleen (NL)
(74) Representative: Modiano, Micaela Nadia
(86) International application number: PCT/EP2015/053808
(87) International publication number: WO 2015/128317

(56) References cited:
- US-A- 3 617 521
- US-A- 3 957 621
- US-A- 4 032 431
- US-A- 4 211 886

## Description

The invention relates to a process for producing BTX from a feedstream comprising a C5-C12 hydrocarbon mixture.

Catalytic reforming of naphtha, or a feedstream that contains a C5-C12 hydrocarbon mixture, is a well-known process to produce BTX. BTX is obtained during catalytic reforming, together with side products of C5 to C10 non-aromatic species. These side products are of less value and cannot be used to produce olefins in a simple gas cracker or LPG steam cracker. It is also necessary to further process the product via a solvent extraction unit to produce a BTX aromatics stream.

US 3617521 describes the reformation of a naphtha feed in the presence of hydrogen at reforming conditions with a catalyst. The catalyst described contains a platinum group component in association with a porous solid carrier.

EP0083875B1 describes a process for reforming a naphtha feed in the presence of hydrogen. This process uses catalysts comprising precious metal (normally platinum), often with a second metal promoter (e.g. Sn, Re) typically supported on alumina and also containing a quantity of halide such as chloride. In this process a number of chemical reactions occur in parallel and series, including the dehydrogenation of naphthenes and the dehydroisomerisation of paraffins to cyclo paraffins. Cracking is avoided in order to achieve a high yield of C5+ liquids.

Another example of the conversion of naphtha is hydrocracking. Hydrocracking has the problem that the amount of BTX produced is not high. Hydrocracking converts only a fraction of the naphtha feed into aromatics. The other fraction is hydrocracked to produce more LPG at the expense of aromatic production and hydrogen consumption.

It has been previously described in WO 02/44306 A1 and WO 2007/055488 A1 that aromatic hydrocarbon compounds and LPG can be produced from a mixed hydrocarbon feedstock having boiling points of 30-250 °C. A hydrocarbon feedstock having boiling points of 30-250 °C and hydrogen is introduced to a reaction zone wherein said hydrocarbon feedstock is converted in the presence of a catalyst to aromatic hydrocarbon compounds abundant in BTX through hydrodealkylation and/or transalkylation and to non-aromatic hydrocarbon compounds which are abundant in LPG through hydrocracking and recovering the aromatic hydrocarbon compounds and LPG, respectively, through gas-liquid separation and distillation. The methods of WO 02/44306 A1 and WO 2007/055488 produce a product stream comprising a relatively high amount of non-aromatic hydrocarbons that co-boil with BTX rendering it impossible to produce chemical grade BTX without using solvent extraction methods and a relatively high amount of fuel gas at the expense of the LPG produced. US2009/0200201 describes a process for converting heavy hydrocarbonaceous feeds to jet and diesel products. The process can be performed in a single reactor using a dual catalyst system. The process to convert the hydrocarbon feed involves hydrotreating and hydrofinishing the feed with at least two catalysts in the presence of hydrogen. The process according to US2009/0200201 is aimed at removing aromatics. There is a demand for a process for producing BTX from C5-C12 hydrocarbon mixture that produces a product stream wherein the yield of BTX is improved and side products of more value are produced.

Accordingly, the present invention provides a process for producing BTX according to claim 1.

An advantage of the process according to the invention is that BTX is obtained with a high yield together with LPG as added value side products. The separation of the obtained BTX does not require solvent extraction. A further advantage of the process of the present invention is that the cracking severity on the hydrocracking catalyst is reduced since less naphthenes are treated by the hydrocracking catalyst, which will result in longer cycle lengths.
In the process according to the invention a feedstream comprising C5-C12 hydrocarbons is contacted in the presence of hydrogen with a reforming catalyst to produce a reformed product stream. Use of the reforming catalyst has the effect of dehydrogenating cyclohexane to benzene and methyl cyclohexane to toluene etc. The majority of the C6-C8 naphthenes in the feedstream are thus upgraded to the corresponding C6-C8 aromatics. Thereafter, the reformed product stream is contacted in the presence of hydrogen with a hydrocracking catalyst to produce a hydrocracking product stream comprising BTX. During hydrocracking the reformed product stream is converted to the hydrocracking product stream that comprises hydrocarbon products with a lower amount of carbon atoms (lighter products). The hydrocracking step is able to purify the reformed product stream by cracking paraffinic, and residual olefinic and naphthenic coboilers of BTX to produce added value LPG. The BTX is subsequently separated from the hydrocracking product stream. This separation can be performed by methods known to a person skilled in the art, for example by distillation.
It is noted that US3617521 discloses a two steps process involving reforming without hydrocracking and subsequent reforming involving hydrocracking. In the first reactor, a naphtha feed is contacted with a catalyst comprising a mixture of (1) a layered crystalline clay-type aluminosilicate and (2) a platinum group component in association with a porous amorphous solid carrier to convert naphthenes to aromatics without substantial cracking. The effluent from the first reaction reactor is contacted in a subsequent reaction reactor at reforming conditions in the presence of hydrogen with a catalyst comprising a platinum group component in association with a porous amorphous solid carrier to convert paraffins to aromatics and to hydrocrack high molecular weight hydrocarbons to lower molecular weight hydrocarbons.

US3617521 does not disclose a hydrocracking catalyst comprising a zeolite. US3617521 further mentions that the acidity of the catalyst in the subsequent reaction zone is preferably low.

Steps (a) and (b) of the process according to the invention are performed in a single reactor. The reactor is preferably a fixed bed reactor. Steps (a) and (b) are performed in a single reactor having a first catalyst layer comprising the reforming catalyst and a second catalyst layer consisting of the hydrocracking catalyst. This is advantageous since the reactor has a better operability and less flow streams. The catalyst layers have a better integration. Further, the single reactor has a lower capital expenditure (CAPEX) than two reactors. The single reactor is beneficial for better heat utility and heat integration. The relatively high temperature required for the hydrocracking is advantageous for the reforming, since high temperatures shift the equilbrium of naphthenes to aromatics more in favor of aromatics. By having only one reactor, the utilty cost is reduced. When steps (a) and (b) of the process according to the invention are performed in two reactors in series, it is preferable that the reformed product stream is subjected to step (a) without prior separation or an addition of further hydrocarbons.
The first catalyst layer and the second catalyst layer may be in the form of a continuous dense packing (or sock loading) of the hydrocracking catalyst and the reforming catalyst directly on top of and in contact with the hydrocracking catalyst. Alternatively, the two catalysts may be in two separately spaced beds within the same reactor with a void space or an inert layer made e.g. of SiC between them. The second catalyst layer comprises only the hydrocracking catalyst as described above as the catalyst, i.e. the catalyst in the second catalyst layer is not a mixture of the hydrocracking catalyst as described above and a further catalyst.

Accordingly, in the invention, the reactor has a first catalyst layer comprising the reforming catalyst and a second catalyst layer comprising the hydrocracking catalyst, wherein a space of an inert layer is present between the first catalyst layer and the second catalyst layer, or the first catalyst layer is in contact with the second catalyst layer. The second catalyst layer consists of the hydrocracking catalyst. US4032431 discloses a process for upgrading a naphtha which has been subjected to a reforming process. In US4032431, one example of a suitable catalyst arrangement comprises providing contact with a platinum type reforming catalyst in one bed of catalyst followed by contact with a selective conversion catalyst in a second portion of catalyst bed within a single reactor. However, US4032431 does not describe the catalyst and the conditions as required in the hydrocracking step (b) of the process of the present invention. US3957621 and US4211886 also disclose a method for producing BTX by a series of steps, but do not describe the catalyst and the conditions as required in the hydrocracking step (b) of the process of the present invention. According to the process of the present invention, hydrocracking is performed using a specific hydrocracking catalyst at specific hydrocracking conditions. The hydrocracking product stream obtained according to the process of the invention is advantageously substantially free from non-aromatic C6+ hydrocarbons.

The feedstream used in the process of the present invention is a mixture comprising C5-C12 hydrocarbons, preferably having a boiling point of at most 250 ºC, more preferably in the range of 30-195°C. Preferably, the feedstream mainly comprises C6-C8 hydrocarbons. Suitable feedstreams include, but are not limited to first stage hydro-treated pyrolysis gasoline, straight run naphtha, hydrocracked gasoline, light coker naphtha and coke oven light oil, FCC gasoline, reformate or mixtures thereof. The feedstream may have a relatively high sulphur content, such as pyrolysis gasoline (pygas), straight run naphtha, light coker naphtha and coke oven light oil and mixtures thereof. Furthermore, it is preferred that the non-aromatic species comprised in the hydrocarbon feed are saturated (e.g. by prior hydrogenation) in order to reduce the exotherm within the catalyst bed used in the present process.

For instance, a typical composition of first stage hydro-treated pyrolysis gasoline may comprise 10-15 wt-% C5 olefins, 2-4 wt-% C5 paraffins and cycloparaffins, 3-6 wt-% C6 olefins, 1-3 wt-% C6 paraffins and naphthenes, 25-30 wt-% benzene, 15-20 wt-% toluene, 2-5 wt-% ethylbenzene, 3-6 wt-% xylenes, 1-3 wt-% trimethylbenzenes, 4-8 wt-% dicyclopentadiene, and 10-15 wt-% C9+ aromatics, alkylstyrenes and indenes; see e.g. Table E3.1 from Applied Heterogeneous Catalysis: Design, Manufacture, and Use of Solid Catalysts (1987) J. F. Le Page. However, also hydrocarbon mixtures that are depentanised and tailed so the concentrations of all the C6 to C9 hydrocarbon species are relatively high compared with the typical figures above can be advantageously used as a feedstream in the process of the present invention.

In one embodiment, the feedstream used in the process of the present invention is treated so that it is enriched in mono-aromatic compounds. As used herein, the term "mono-aromatic compound" relates to a hydrocarbon compound having only one aromatic ring. Means and methods suitable to enrich the content of mono-aromatic compounds in a mixed hydrocarbon stream are well known in the art such as the Maxene process; see Bhirud (2002) Proceedings of the DGMK-conference 115-122.

The feedstream used in the process of the present invention may comprise up to 300 wppm of sulphur (i.e. the weight of sulphur atoms, present in any compound, in relation to the total weight of the feed).

### step (a)

According to the process of the invention, the feedstream is first contacted with a reforming catalyst. The reformed product stream obtained by step (a) comprises a higher proportion of BTX and a less proportion of C6-C8 naphthenes compared to the feedstream. This leads to a high amount of the final BTX obtained and less severity on the hydrocracking catalyst, compared to subjecting the feedstream directly to hydrocracking.

The reforming catalyst comprises a hydrogenation metal and a support of an amorphous alumina. According to some embodiments of the invention, the reforming catalyst consists of the hydrogenation metal and the support of the amorphous alumina. Such reforming catalyst contains little to no acidity. This is particularly suitable for reforming C6+ naphthenes.

According to other embodiments of the invention, the reforming catalyst further comprises a layered crystalline clay-type aluminosilicate. This is suitable for reforming alkyl-cyclopentanes like methylcyclopentane to benzene. Such catalyst is described e.g. in US3617521.

Preferably, the hydrogenation metal of the reforming catalyst is at least one element selected from Group 10 of the Periodic Table of Elements, more preferably Pt.

Step (a) may be performed at conditions as described below for step (b). The conditions for step (a) and (b) may be the same or different. For example, steps (a) and (b) may be performed at different Weight Hourly Space Velocity.

For example, step (a) may be performed at a temperature of 425-580 °C, a pressure of 300-5000 kPa gauge and a Weight Hourly Space Velocity of 0.1-15 h⁻¹.

### step (b)

The product produced by the hydrocracking step of the process of the present invention (hydrocracking product stream) comprises LPG, BTX and methane.

The term "LPG" as used herein refers to the well-established acronym for the term "liquefied petroleum gas". LPG generally consists of a blend of C2-C4 hydrocarbons i.e. a mixture of C2, C3, and C4 hydrocarbons.

The term "BTX" as used herein is well known in the art and relates to a mixture of benzene, toluene and xylenes.

According to the present invention, the hydrocracking product stream can easily be separated into chemical grade BTX. As used herein, the term "chemical grade BTX" relates to a hydrocarbon mixture comprising less than 5 wt-% hydrocarbons other than benzene, toluene and xylenes, preferably less than 4 wt-% hydrocarbons other than benzene, toluene and xylenes, more preferably less than 3 wt-% hydrocarbons other than benzene, toluene and xylenes, and most preferably less than 2.5 wt-% hydrocarbons other than benzene, toluene and xylenes.

Furthermore, the "chemical grade BTX" produced by the process of the present invention comprises less than 1 wt-% non-aromatic C6+ hydrocarbons, preferably less than 0.7 wt-% non-aromatic C6+ hydrocarbons, more preferably less than 0.6 wt-% non-aromatic C6+ hydrocarbons and most preferably less than 0.5 wt-% non-aromatic C6+ hydrocarbons. The most critical contaminants are the non-aromatic species which have boiling points close to benzene including, but not limited to, cyclohexane, methylcyclopentane, n-hexane, 2-methylpentane and 3-methylpentane.

Accordingly, the hydrocracking product stream is substantially free from non-aromatic C6+ hydrocarbons. As meant herein, the term "product stream substantially free from non-aromatic C6+ hydrocarbons" means that said product stream comprises less than 1 wt-% non-aromatic C6+ hydrocarbons, preferably less than 0.7 wt-% non-aromatic C6+ hydrocarbons, more preferably less than 0.6 wt-% non-aromatic C6+ hydrocarbons and most preferably less than 0.5 wt-% non-aromatic C6+ hydrocarbons.

The term "aromatic hydrocarbon" is very well known in the art. Accordingly, the term "aromatic hydrocarbon" relates to cyclically conjugated hydrocarbon with a stability (due to delocalization) that is significantly greater than that of a hypothetical localized structure (e.g. Kekulé structure). The most common method for determining aromaticity of a given hydrocarbon is the observation of diatropicity in the 1H NMR spectrum, for example the presence of chemical shifts in the range of from 7.2 to 7.3 ppm for benzene ring protons.

The hydrocracking product stream produced in the process of the present invention preferably comprises less than 10 wt-% of methane. More preferably, the hydrocracking product stream produced in the process of the present invention comprises less than 5 wt-% of methane, more preferably less than 4 wt-% methane, more preferably less than 3 wt-% methane, even more preferably less than 2 wt-% methane, particularly preferably less than 1.5 wt-% methane and most preferably less than 1 wt-% methane.

Preferably, the hydrocracking product stream is also substantially free from C5 hydrocarbons. As meant herein, the term "product stream substantially free from C5 hydrocarbons" means that said hydrocracking product stream comprises less than 1 wt-% C5 hydrocarbons, preferably less than 0.7 wt-% C5 hydrocarbons, more preferably less than 0.6 wt-% C5 hydrocarbons and most preferably less than 0.5 wt-% C5 hydrocarbons.

The reformed product feedstream can be subjected to hydrodesulphurisation before hydrocracking.

In preferred embodiments, the hydrocracking catalyst further has a hydrodesulphurisation activity. This is advantageous in that it is not necessary to subject the hydrocarbon feedstream to a desulphurisation treatment prior to subjecting said hydrocarbon feedstream to the hydrocracking treatment.

Catalysts having hydrocracking/hydrodesulphurisation activity ("hydrocracking/hydrodesulphurisation catalyst") are described on pages 13-14 and 174 of Hydrocracking Science and Technology (1996) Ed. Julius Scherzer, A.J. Gruia, Pub. Taylor and Francis. Hydrocracking and hydrodesulphurisation reactions proceed through a bifunctional mechanism which requires a relatively strong acid function, which provides for the cracking and isomerization and which provides breaking of the sulphur-carbon bonds comprised in the organic sulfur compounds comprised in the feed, and a metal function, which provides for the olefin hydrogenation and the formation of hydrogen sulfide. Many catalysts used for the hydrocracking/hydrodesulphurisation process are formed by composting various transition metals with the solid support such as alumina, silica, alumina-silica, magnesia and zeolites.

In the invention, the hydrocracking catalyst comprises 0.01-1 wt-%, preferably 0.01-0.8 wt%, preferably 0.01-0.5 wt%, of a hydrogenation metal in relation to the total catalyst weight and a zeolite having a pore size of 5-8 Å and a silica (SiO₂) to alumina (Al₂O₃) molar ratio of 5-120. Step (b) is performed at a temperature of 425-580 °C, a pressure of 300-5000 kPa gauge and a Weight Hourly Space Velocity of 0.1-15 h⁻¹ to produce the hydrocracking product stream. More preferably, step (b) is performed at a temperature of 450-580 °C, a pressure of 300-5000 kPa gauge and a Weight Hourly Space Velocity of 0.1-10 h⁻¹ to produce the hydrocracking product stream.
It is a particular advantage that the hydrocracking product stream is substantially free from non-aromatic C6+ hydrocarbons as these hydrocarbons usually have boiling points close to the boiling point of C6+ aromatic hydrocarbons. Hence, it can be difficult to separate the non-aromatic C6+ hydrocarbons from the aromatic C6+ hydrocarbons comprised in the hydrocracking product stream by distillation.
The advantageous effects of these embodiments are obtained by strategically selecting the hydrocracking catalyst in combination with the hydrocracking conditions. By combining a hydrocracking catalyst having a relatively strong acid function (e.g. by selecting a catalyst comprising a zeolite having a pore size of 5-8 Å and a silica (SiO₂) to alumina (Al₂O₃) molar ratio of 5-200) and a relatively strong hydrogenation activity (e.g. by selecting a catalyst comprising 0.01-1 wt-% hydrogenation metal) with process conditions comprising a relatively high process temperature (e.g. by selecting a temperature of 425-580 °C), chemical grade BTX and LPG can be produced, wherein production of methane is reduced and wherein conversion of the benzene comprised in the feedstream to other hydrocarbon compounds such as naphthene compounds is reduced.
The hydrocracking is performed at a pressure of 300-5000 kPa gauge, more preferably at a pressure of 600-3000 kPa gauge, particularly preferably at a pressure of 1000-2000 kPa gauge and most preferably at a pressure of 1200-1600 kPa gauge. By increasing reactor pressure, conversion of C5+ non-aromatics can be increased, but also increases the yield of methane and the hydrogenation of aromatic rings to cyclohexane species which can be cracked to LPG species. This results in a reduction in aromatic yield as the pressure is increased and, as some cyclohexane and its isomer methylcyclopentane, are not fully hydrocracked, there is an optimum in the purity of the resultant benzene at a pressure of 1200-1600 kPa.
The hydrocracking is performed at a Weight Hourly Space Velocity (WHSV) of 0.1-15 h⁻¹, more preferably at a Weight Hourly Space Velocity of 1-10 h⁻¹ and most preferably at a Weight Hourly Space Velocity of 2-9 h⁻¹. When the space velocity is too high, not all BTX co-boiling paraffin components are hydrocracked, so it will become difficult to achieve BTX specification by simple distillation of the reactor product. At too low space velocity the yield of methane rises at the expense of propane and butane. Further, too low space velocity has the potential problem of turning the aromatics created in step (a) back into naphthenes. By selecting the optimal Weight Hourly Space Velocity, it was surprisingly found that sufficiently complete reaction of the benzene co-boilers is achieved to produce on spec BTX without the need for a liquid recycle.

Accordingly, the hydrocracking conditions thus include a temperature of 425-580 °C, a pressure of 300-5000 kPa gauge and a Weight Hourly Space Velocity of 0.1-15 h⁻¹. More preferred hydrocracking conditions include a temperature of 450-550 °C, a pressure of 600-3000 kPa gauge and a Weight Hourly Space Velocity of 1-10 h⁻¹. Particularly preferred hydrocracking conditions include a temperature of 470-550 °C, a pressure of 1000-2000 kPa gauge and a Weight Hourly Space Velocity of 2-9 h⁻¹.

Hydrocracking catalysts that are particularly suitable for the process of the present invention comprise a molecular sieve, preferably a zeolite, having a pore size of 5-8 Å. Zeolites are well-known molecular sieves having a well-defined pore size. As used herein, the term "zeolite" or "aluminosilicate zeolite" relates to an aluminosilicate molecular sieve. An overview of their characteristics is for example provided by the chapter on Molecular Sieves in Kirk-Othmer Encyclopedia of Chemical Technology, Volume 16, p 811-853; in Atlas of Zeolite Framework Types, 5th edition, (Elsevier, 2001). Preferably, the hydrocracking catalyst comprises a medium pore size aluminosilicate zeolite or a large pore size aluminosilicate zeolite. Suitable zeolites include, but are not limited to, ZSM-5, MCM-22, ZSM-11, beta zeolite, EU-1 zeolite, zeolite Y, faujasite, ferrierite and mordenite. The term "medium pore zeolite" is commonly used in the field of zeolite catalysts. Accordingly, a medium pore size zeolite is a zeolite having a pore size of about 5-6 Å. Suitable medium pore size zeolites are 10-ring zeolites, i.e. the pore is formed by a ring consisting of 10 SiO₄ tetrahedra. Suitable large pore size zeolites have a pore size of about 6-8 Å and are of the 12-ring structure type. Zeolites of the 8-ring structure type are called small pore size zeolites. In the above cited Atlas of Zeolite Framework Types various zeolites are listed based on ring structure. Most preferably the zeolite is ZSM-5 zeolite, which is a well-known zeolite having MFI structure.

Preferably, the silica (SiO₂) to alumina (Al₂O₃) molar ratio of the ZSM-5 zeolite is in the range of 20-200, more preferably in the range of 30-100.

The zeolite is in the hydrogen form: i.e. having at least a portion of the original cations associated therewith replaced by hydrogen. Methods to convert an aluminosilicate zeolite to the hydrogen form are well known in the art. A first method involves direct ion exchange employing an acid and/or salt. A second method involves base-exchange using ammonium salts followed by calcination.
Furthermore, the catalyst composition comprises a sufficient amount of hydrogenation metal to ensure that the catalyst has a relatively strong hydrogenation activity. Hydrogenation metals are well known in the art of petrochemical catalysts.
The catalyst composition preferably comprises 0.01-1 wt-% hydrogenation metal, more preferably 0.01-0.8 wt-%, more preferably 0.01-0.7 wt-%, most preferably 0.01-0.5 wt-% hydrogenation metal. In the context of the present invention, the term "wt%" when relating to the metal content as comprised in a catalyst composition relates to the wt% (or "wt-%") of said metal in relation to the weight of the total catalyst, including catalyst binders, fillers, diluents and the like. Preferably, the hydrogenation metal is at least one element selected from Group 10 of the periodic table of Elements. The preferred Group 10 element is platinum. Accordingly, the hydrocracking catalyst used in the process of the present invention comprises a zeolite having a pore size of 5-8 Å, a silica (SiO₂) to alumina (Al₂O₃) molar ratio of 5-120 and 0.01-1 wt-% platinum (in relation to the total catalyst).
The hydrocracking catalyst composition may further comprise a binder. Alumina (Al₂O₃) is a preferred binder. The catalyst composition of the present invention preferably comprises at least 10 wt-%, most preferably at least 20 wt-% binder and preferably comprises up to 40 wt-% binder. In one embodiment, the hydrogenation metal is deposited on the binder, which preferably is Al₂O₃.
According to one embodiment of the invention the hydrocracking catalyst is a mixture of the hydrogenation metal on a support of an amorphous alumina and the zeolite. According to another embodiment of the invention the hydrocracking catalyst is the hydrogenation metal on a support of the zeolite. In this case, the hydrogenation metal and the zeolite giving cracking functions are in closer proximity to one another which translates into a shorter diffusion length between the two sites. This allows high space velocity, which translates into smaller reactor volumes and thus lower CAPEX. Accordingly, in some preffered embodiments, the hydrocracking catalyst is the hydrogenation metal on a support of the zeolite and step (b) is performed at a Weight Hourly Space Velocity of 0.1-15 h⁻¹.

The hydrocracking step is performed in the presence of an excess amount of hydrogen in the reaction mixture. This means that a more than stoichiometric amount of hydrogen is present in the reaction mixture that is subjected to hydrocracking. Preferably, the molar ratio of hydrogen to hydrocarbon species (H₂/HC molar ratio) in the reactor feed is between 1:1 and 4:1, preferably between 1:1 and 3:1 and most preferably between 1:1 and 2:1. In the context of the present invention, it was surprisingly found that a higher benzene purity in the product stream can be obtained by selecting a relatively low H₂/HC molar ratio. In this context the term "hydrocarbon species" means all hydrocarbon molecules present in the reactor feed such as benzene, toluene, hexane, cyclohexane etc. It is necessary to know the composition of the feed to then calculate the average molecular weight of this stream to be able to calculate the correct hydrogen feed rate. The excess amount of hydrogen in the reaction mixture suppresses the coke formation which is believed to lead to catalyst deactivation.

### Separation of BTX from hydrocracking product stream

The hydrocracking product stream is subjected to separation by standard means and methods suitable for separating methane and unreacted hydrogen comprised in the hydrocracking product stream as a first separate stream, the LPG comprised in the hydrocracking product stream as a second separate stream and the BTX as a third separate stream. Preferably, the BTX is separated from the hydrocracking product stream by gas-liquid separation or distillation. Preferably, after the BTX is separated from the hydrocracking product stream, benzene, toluene and xylene are separated from each other by gas-liquid separation or distillation. One non-limiting example of a separation method of the BTX from the hydrocracking product stream includes a series of distillation steps. The first distillation step at moderate temperature is to separate most of the aromatic species (liquid product) from the hydrogen, H₂S, methane and LPG species. The gaseous stream from this distillation is further cooled (to about -30 °C) and distilled again to separate the remaining aromatics species and most of the propane and butane. The gaseous product (mainly hydrogen, H₂S, methane and ethane) is then further cooled (to about -100 °C) to separate the ethane and leave the hydrogen, H₂S and methane in the gaseous stream that will be recycled to the reactor. To control the levels of H₂S and methane in the reactor feed, a proportion of recycle gas stream is removed from the system as a purge. The quantity of material that is purged depends on the levels of methane and H₂S in the recycle stream which in-turn depend on the feed composition. The purge stream will have the same composition as the recycle stream. As the purge will contain mainly hydrogen and methane it is suitable for use as a fuel gas or may be further treated (e.g. via a pressure swing adsorption unit) to separately recover a high purity hydrogen stream and a methane / H₂S stream which can be used as a fuel gas.

The invention is also directed to a fixed bed reactor according to claim 10.

### Examples

### Comparative experiment A

A naphtha feed having the composition shown in Table 1 was fed to a reactor having a hydrocracking catalyst layer comprising 3.5 g of a hydrocracking catalyst which is a mixture of Pt and ZSM-5. The amount of Pt in the hydrocracking catalyst was 0.75 wt% of the total hydrocracking catalyst. BTX was separated from the resulting product stream by distillation. The process conditions were 475 ºC, 200 psig, H2/HC=3, WHSV=1/hr. The composition of the resulting product stream is shown in Table 1.

### Example 1

Comparative experiment A was repeated at same process conditions except that a reforming layer was added on top of the hydrocracking catalyst layer. An inert SiC layer was present between the reforming catalyst layer and the hydrocracking catalyst layer. The reforming catalyst is Pt loaded onto an amorphous alumina support. The composition of the resulting product stream is shown in Table 1.

**Table 1 (virgin naphtha)**

| | feedstream (wt%) | Comp. A (wt%) | Ex.1 (wt%) |
|---|---|---|---|
| benzene | 2.93 | 2.81 | 4.89 |
| toluene | 2.10 | 4.86 | 7.69 |
| xylene | 1.40 | 2.83 | 4.41 |
| cyclohexane | 5.13 | 0.01 | 0.01 |
| methylcyclohexane | 2.40 | 0.02 | 0.01 |

### Comp B

Comp Ex A was repeated except that the composition in the feedstream was as shown in Table 2. The result is shown in Table 2. Conditions - 460 ºC, 200psig, WHSV=5/hr, H2/HC=1.

### Example 2

Example 1 was repeated at same process conditions except that the composition in the feedstream was as shown in Table 2. The result is shown in Table 2.

**Table 2 (spiked naphtha)**

| | feedstream (wt%) | Comp. B (wt%) | Ex.2 (wt%) |
|---|---|---|---|
| benzene | 0.90 | 3.03 | 21.30 |
| toluene | 1.21 | 6.69 | 10.63 |
| xylene | 1.65 | 4.04 | 2.83 |
| cyclohexane | 30.96 | 0.00 | 0.00 |
| methlcyclohexane | 0.30 | 0.05 | 0.04 |

It can be seen that the combination of the reforming catalyst and the hydrocracking catalyst according to the invention leads to a higher yield of benzene, toluene and xylene.

## Claims

1. A process for producing BTX comprising:
(a) contacting a feedstream comprising C5-C12 hydrocarbons in the presence of hydrogen with a reforming catalyst to produce a reformed product stream, wherein the reforming catalyst comprises a hydrogenation metal and a support of an amorphous alumina,
(b) contacting the reformed product stream in the presence of hydrogen with a hydrocracking catalyst to produce a hydrocracking product stream comprising BTX, wherein the hydrocracking catalyst comprises a hydrogenation metal and a zeolite and
(c) separating the BTX from the hydrocracking product stream,
wherein the hydrocracking catalyst comprises 0.01-1 wt%, preferably 0.01-0.5 wt%, of the hydrogenation metal in relation to the total catalyst weight and the zeolite has a pore size of 5-8 Å and a silica (SiO₂) to alumina (Al2O3) molar ratio of 5-120, preferably 30-120,
wherein step (b) or steps (a) and (b) are performed at a temperature of 425-580 °C, a pressure of 300-5000 kPa gauge and a Weight Hourly Space Velocity of 0.1-15 h⁻¹, preferably 0.1-10 h⁻¹,
wherein steps (a) and (b) are performed in a single reactor,
wherein the reactor has a first catalyst layer comprising the reforming catalyst and a second catalyst layer comprising the hydrocracking catalyst, wherein a space of an inert layer is present between the first catalyst layer and the second catalyst layer or the first catalyst layer is in contact with the second catalyst layer and
wherein the second catalyst layer consists of the hydrocracking catalyst.

2. The process according to claim 1, wherein the hydrogenation metal of the reforming catalyst is at least one element selected from Group 10 of the periodic table of Elements, preferably Pt.

3. The process according to any one of claims 1-2, wherein the reforming catalyst consists of the hydrogenation metal and the support of the amorphous alumina.

4. The process according to any one of claims 1-2, wherein the reforming catalyst further comprises a layered crystalline clay-type aluminosilicate.

5. The process according to any one of the preceding claims, wherein the hydrogenation metal of the hydrocracking catalyst is at least one element selected from Group 10 of the periodic table of Elements, preferably Pt.

6. The process according to any one of the preceding claims, wherein the zeolite is selected from the group consisting of ZSM-5, MCM-22, ZSM-11, beta zeolite, EU-1 zeolite, zeolite Y, faujastite, ferrierite and mordenite, preferably ZSM-5.

7. The process according to any one of the preceding claims, wherein the feedstream comprises pyrolysis gasoline, straight run naphtha, light coker naphtha and coke oven light oil or mixtures thereof.

8. The process according to any one of claims 1-7, wherein the hydrocracking catalyst is a mixture of the hydrogenation metal on a support of an amorphous alumina and the zeolite.

9. The process according to any one claims 1-8, wherein the hydrocracking catalyst is the hydrogenation metal on a support of the zeolite.

## Patentansprüche

1. Ein Verfahren zur Erzeugung von BTX, das Folgendes umfasst:
(a) In-Kontakt-bringen eines Zustroms umfassend C5-C12 Kohlenwasserstoffe in der Anwesenheit von Wasserstoff mit einem Reforming-Katalysator, um einen reformierten Produktstrom zu erzeugen, worin der Reforming-Katalysator ein Hydrierungsmetall und einen Träger aus einem amorphen Aluminiumoxid umfasst,
(b) In-Kontakt-bringen des reformierten Produktstroms in der Anwesenheit von Wasserstoff mit einem Hydrocracking-Katalysator, um einen Hydrocracking-Produktstrom umfassend BTX zu erzeugen, worin der Hydrocracking-Katalysator ein Hydrierungsmetall und einen Zeolith umfasst, und
(c) Abtrennen des BTX von dem Hydrocracking-Produktstrom, worin der Hydrocracking-Katalysator 0,01-1 Gewichts%, vorzugsweise 0,01-0,5 Gewichts%, von dem Hydrierungsmetall bezogen auf das Gesamtkatalysatorgewicht umfasst, und der Zeolith hat eine Porengröße von 5-8 Å und ein molares Verhältnis von Siliziumdioxid (SiO2) zu Aluminiumoxid (Al203) von 5-120, vorzugsweise 30-120,
worin Schritt (b) oder Schritte (a) und (b) bei einer Temperatur von 425-580°C, einem Druck von 300-5000 kPa Überdruck und einer Massenstrom-bezogenen Raumgeschwindigkeit von 0,1-15 h⁻¹, vorzugsweise 0,1-10 h⁻¹, durchgeführt werden,
worin Schritte (a) und (b) in einem einzigen Reaktor durchgeführt werden, worin der Reaktor eine erste Katalysatorschicht umfassend den Reforming-Katalysator und eine zweite Katalysatorschicht umfassend den Hydrocracking-Katalysator hat, worin ein Raum einer inerten Schicht zwischen der ersten Katalysatorschicht und der zweiten Katalysatorschicht vorhanden ist, oder die erste Katalysatorschicht ist in Kontakt mit der zweiten Katalysatorschicht, und
worin die zweite Katalysatorschicht aus dem Hydrocracking-Katalysator besteht.

2. Das Verfahren gemäß Anspruch 1, worin das Hydrierungsmetall des Reforming-Katalysators mindestens ein Element gewählt aus Gruppe 10 des Periodensystems der Elemente, vorzugsweise Pt, ist.

3. Das Verfahren gemäß irgendeinem der Ansprüche 1-2, worin der Reforming-Katalysator aus dem Hydrierungsmetall und dem Träger aus dem amorphen Aluminiumoxid besteht.

4. Das Verfahren gemäß irgendeinem der Ansprüche 1-2, worin der Reforming-Katalysator weiter ein geschichtetes kristallines Aluminiumsilikat vom Ton-Typ umfasst.

5. Das Verfahren gemäß irgendeinem der vorhergehenden Ansprüche, worin das Hydrierungsmetall des Hydrocracking-Katalysators mindestens ein Element gewählt aus Gruppe 10 des Periodensystem der Elemente, vorzugsweise Pt, ist.

6. Das Verfahren gemäß irgendeinem der vorhergehenden Ansprüche, worin der Zeolith gewählt ist aus der Gruppe bestehend aus ZSM-5, MCM-22, ZSM-11, Betazeolith, EU-1 Zeolith, Zeolith Y, Faujastit, Ferrierit und Mordenit, vorzugsweise ZSM-5.

7. Das Verfahren gemäß irgendeinem der vorhergehenden Ansprüche, worin der Zustrom Pyrrolysebenzin, straight run - Naphtha, leichtes Coker-Naphtha und Koksofen-Leichtöl oder Mischungen daraus umfasst.

8. Das Verfahren gemäß irgendeinem der Ansprüche 1-7, worin der Hydrocracking-Katalysator eine Mischung aus dem Hydrierungsmetall auf einem Träger aus einem amorphen Aluminiumoxid und dem Zeolith ist.

9. Das Verfahren gemäß irgendeinem der Ansprüche 1-8, worin der Hydrocracking-Katalysator das Hydrierungsmetall auf einem Träger aus dem Zeolith ist.

## Revendications

1. Procédé de production de BTX comprenant :
(a) la mise en contact d'un courant d'alimentation comprenant des hydrocarbures en C5 à C12 en présence d'hydrogène avec un catalyseur de reformage pour produire un courant de produit reformé, dans laquelle le catalyseur de reformage comprend un métal d'hydrogénation et un support d'une alumine amorphe,
(b) la mise en contact du courant de produit reformé en présence d'hydrogène avec un catalyseur d'hydrocraquage pour produire un courant de produit d'hydrocraquage comprenant du BTX, dans laquelle le catalyseur d'hydrocraquage comprend un métal d'hydrogénation et une zéolite, et
(c) la séparation du BTX du courant de produit d'hydrocraquage,
dans lequel le catalyseur d'hydrocraquage comprend de 0,01 à 1 % en poids, de préférence de 0,01 à 0,5 % en poids, du métal d'hydrogénation par rapport au poids total du catalyseur et la zéolite a une taille de pore de 5 à 8 Å et un rapport molaire de la silice (SiO2) à l'alumine (Al2O3) de 5 à 120, de préférence de 30 à 120,
dans lequel l'étape (b) ou les étapes (a) et (b) sont réalisées à une température de 425 à 580 °C, une pression manométrique de 300 à 5 000 kPa et une vitesse spatiale horaire pondérale de 0,1 à 15 h⁻¹, de préférence de 0,1 à 10 h⁻¹,
dans lequel les étapes (a) et (b) sont réalisées dans un unique réacteur,
dans lequel le réacteur a une première couche de catalyseur comprenant le catalyseur de reformage et une seconde couche de catalyseur comprenant le catalyseur d'hydrocraquage, dans lequel un espace d'une couche inerte est présent entre la première couche de catalyseur et la seconde couche de catalyseur ou la première couche de catalyseur est en contact avec la seconde couche de catalyseur et
dans lequel la seconde couche de catalyseur se compose du catalyseur d'hydrocraquage.

2. Procédé selon la revendication 1, dans lequel le métal d'hydrogénation du catalyseur de reformage est au moins un élément choisi dans le groupe 10 du tableau périodique des éléments, de préférence le Pt.

3. Procédé selon l'une quelconque des revendications 1 à 2, dans lequel le catalyseur de reformage se compose du métal d'hydrogénation et du support de l'alumine amorphe.

4. Procédé selon l'une quelconque des revendications 1 à 2, dans lequel le catalyseur de reformage comprend en outre un aluminosilicate de type argile cristallin en couches.

5. Procédé selon l'une quelconque des revendications précédentes, dans lequel le métal d'hydrogénation du catalyseur d'hydrocraquage est au moins un élément choisi dans le groupe 10 du tableau périodique des éléments, de préférence le Pt.

6. Procédé selon l'une quelconque des revendications précédentes, dans lequel la zéolite est choisie dans le groupe constitué par ZSM-5, MCM-22, ZSM-11, la zéolite bêta, la zéolite EU-1, la zéolite Y, la faujastite, le ferriétite et la mordénite, de préférence ZSM-5.

7. Procédé selon l'une quelconque des revendications précédentes, dans lequel le courant d'alimentation comprend une essence de pyrolyse, un naphta de passe directe, un naphta de cokéfaction léger et une huile légère de cokerie ou des mélanges de ceux-ci.

8. Procédé selon l'une quelconque des revendications 1 à 7 précédentes, dans lequel le catalyseur d'hydrocraquage est un mélange du métal d'hydrogénation sur un support d'une alumine amorphe et de la zéolite.

9. Procédé selon l'une quelconque des revendications 1 à 8, dans lequel le catalyseur d'hydrocraquage est le métal d'hydrogénation sur un support de la zéolite.
